# EUROPÄISCHE PATENTSCHRIFT

(11) **EP 2 992 321 B1**
(45) Veröffentlichungstag und Bekanntmachung des Hinweises auf die Patenterteilung: **18.12.2019**
(21) Anmeldenummer: 14724382.8
(22) Anmeldetag: 07.05.2014
(51) Int. Cl.: G01N 29/04, G01N 29/06, G01S 15/89

(54) **VERFAHREN UND VORRICHTUNG ZUR DEFEKTGRÖSSENBEWERTUNG MITTELS SAFT (SYNTHETIC APERTURE FOCUSSING TECHNIQUE)**
METHOD AND APPARATUS FOR SIZING OF DEFECTS BY MEANS OF SAFT (SYNTHETIC APERTURE FOCUSSING TECHNIQUE)
PROCÉDÉ ET DISPOSITIF POUR L'EVALUATION DES DEFAUTS PAR SAFT (SYNTHETIC APERTURE FOCUSSING TECHNIQUE)

(30) Priorität: 20.06.2013 DE 102013211616
(43) Veröffentlichungstag der Anmeldung: 09.03.2016
(73) Patentinhaber: Siemens Aktiengesellschaft, 80333 München (DE)
(72) Erfinder: BÖHM, Rainer, 15848 Rietz-Neuendorf (DE); FENDT, Karl, 81677 München (DE); HEINRICH, Werner, 16727 Oberkrämer OT Bärenklau (DE); MOOSHOFER, Hubert, 80538 München (DE)
(86) Internationale Anmeldenummer: PCT/EP2014/059318
(87) Internationale Veröffentlichungsnummer: WO 2014/202275

(56) Entgegenhaltungen:
- EP-A1- 2 120 045
- LANGENBERG K J ET AL: "IMAGING AND INVERSE SCATTERING IN NONDESTRUCTIVE EVALUATION WITH ACOUSTIC AND ELASTIC WAVES", ACOUSTICAL IMAGING. NANJING, SEPT. 12 - 14, 1992; [PROCEEDINGS OF THE INTERNATIONAL SYMPOSIUM ON ACOUSTICAL IMAGING], NEW YORK, PLENUM PRESS, US, Bd. 20, 12. September 1992 (1992-09-12), Seiten 165-172, XP000448545,
- MCGARRITY J P ET AL: "A facet ensemble approach for evaluation of array performance in ultrasonic NDE", IEEE TRANSACTIONS ON ULTRASONICS, FERROELECTRICS AND FREQUENCY CONTROL, IEEE, US, Bd. 41, Nr. 1, 1. Januar 1994 (1994-01-01) , Seiten 19-25, XP011439033, ISSN: 0885-3010, DOI: 10.1109/58.265816

## Beschreibung

Die Erfindung betrifft ein Verfahren und eine Vorrichtung zur Defektgrößenbewertung von einem Defekt innerhalb eines Prüfobjekts und insbesondere zur Defektgrößenbewertung von einem Defekt mittels Ultraschall.

Prüfobjekte wie beispielsweise maschinelle Bauteile oder ähnliches werden nach ihrer Herstellung dahingehend geprüft, ob sie Defekte, wie zum Beispiel kleine Hohlräume oder Risse aufweisen. Eine solche Prüfung erfolgt dabei vorzugsweise mittels Ultraschall. Für eine solche Ultraschallprüfung ist das sogenannte SAFT (Synthetic Aperture Focussing Technique)-Verfahren bekannt, um auch sehr kleine Defekte innerhalb des Prüfobjektes zu detektieren und von anderen Defekten abzugrenzen. Das SAFT-Verfahren ermöglicht eine Verbesserung der lateralen Defektauflösung, der Defekttrennung und des SNR (Signal-Rausch-Verhältnis) bei der Ultraschallprüfung.

Von zentraler Bedeutung für die Beurteilung der Prüfergebnisse ist dabei die Bewertung der Größe von Defekten, anhand deren Zulässigkeit bestimmt wird. Bei Defekten, die im Vergleich zu der verwendeten Ultraschall-Wellenlänge groß sind, kann dabei das Ergebnis der SAFT-Auswertung direkt ausgemessen werden. Dagegen ist eine Bewertung von kleinen Defekten bei Einsatz des SAFT-Verfahrens nur eingeschränkt möglich. Zur Größenbewertung kleiner Defekte sind bei der klassischen Ultraschallprüfung beispielsweise die sogenannte Vergleichskörpermethode und das AVG (Abstand-Verstärkung-Größe)-Verfahren bekannt. Dabei wird aus der maximalen Echoamplitude eine sogenannte Ersatzfehlergröße bestimmt, die ein idealisierter Reflektor dieser Größe verursachen würde. Bei der Vergleichskörpermethode werden in einem Vergleichskörper mit den gleichen Ultraschalleigenschaften wie das Prüfobjekt gezielt Testfehler in unterschiedlichem Abstand zur Messfläche eingebracht und daraus eine Echoamplitude in Abhängigkeit vom Schallweg bestimmt. Alternativ hierzu kann bei der AVG-Methode die Echoamplitude in Abhängigkeit vom Schallweg aus einem vom Prüfkopfhersteller gelieferten AVG-Diagramm abgeleitet werden.

Im Gegensatz zu der klassischen Ultraschallprüfung sind die Ergebnisse des SAFT-Verfahrens Amplitudensummen, also Summen von Amplitudenwerten der Ultraschallechos. Abhängig von Prüfobjekt, Prüfraster (d.h. der Anordnung der Messpunkte auf dem Prüfobjekt) und Prüfkopf bestehen diese Amplitudensummen aus unterschiedlich vielen Beiträgen, die sowohl Echos von Hauptstrahlen als auch von Nebenstrahlen des Prüfkopf-Schallbündels umfassen können. Daher lassen sich die konventionellen Methoden zur Größenbewertung kleiner Defekte nicht auf das SAFT-Verfahren übertragen.

Langenberg et al: "Imaging And Inverse Scattering In Nondetructive Evaluation With Acoustic And Elastic Waves", Acoustical Imaging, Nanjung, 12.-14. Sept. 1992, Proceedings of the International Symposium on Accoustical Imaging, Seite 165-172 offenbart eine numerische Modulierung zur Simulation von Messungen, beispielsweise mittels SAFT-Auswertung. Die vorgestellten Simulationsverfahren werden anhand bereits vorhandener Messwerte evaluiert.

McGarrity et al: "A facet ensemble approach for evaluation of array performance in ultrasonic NDE", IEEE Trnsactions on Ultrasonics, Ferroelectrics and Frequency Control, Bd. 41, Nr. 1, 1. Januar 1994, Seite 19-24, ISSN: 0885-3010 zeigt einen Simulationsansatz zur Evaluierung der Leistungsfähigkeit von Arrays in der zerstörungsfreien Prüfung, insbesondere mittels SAFT-Auswertung.

Die Druckschrift EP 2 147 300 A1 beschreibt ein modifiziertes SAFT-Verfahren, bei dem die SAFT-Amplitudensummen so berechnet werden, dass sie mit der klassischen Echoamplitude vergleichbar sind. Die zu untersuchenden Defekte dürfen dabei einerseits jedoch nicht zu klein sein, damit eine klassische Amplitudenbewertung zulässig ist. Andererseits müssen die Defekte jedoch klein genug sein, damit die Reflektion richtungsunabhängig ist. Andernfalls würde eine Unterbewertung der Defekte erfolgen.

Es ist daher eine Aufgabe der vorliegenden Erfindung, ein Verfahren und eine Vorrichtung zur Defektgrößenbewertung von einem Defekt innerhalb eines Prüfobjekts zu schaffen, das die oben genannten Nachteile und Einschränkungen vermeidet und eine breit einsetzbare Defektgrößenbewertung in der Größenordnung der Wellenlänge und darunter ermöglicht.

Dies wird durch die Merkmale der unabhängigen Patentansprüche erreicht.

Es ist eine Idee der vorliegenden Erfindung, Amplitudensummen für Defekte abgestufter Größen an repräsentativen Defektpositionen durch SAFT-Auswertung simulierter Ultraschall-Echosignale zu berechnen und durch einen Vergleich mit den Amplitudensummen, die aus der SAFT-Auswertung der Prüfdaten hervorgehen, die Größe von solchen Defekten zu bewerten, die im Vergleich zu der eingesetzten Ultraschall-Wellenlänge klein sind oder in derselben Größenordnung liegen.

Die erfindungsgemäße Defektgrößenbewertung bietet den Vorteil, dass auch Defekte, die bei einer klassischen Ultraschallprüfung im Rauschen untergehen würden, nun detektiert und bewertet werden können.

Ein weiterer Vorteil besteht darin, dass nahe benachbarte Defekte als einzelne Defekte bewertet werden können, bei denen bisher nur eine gemeinsame Bewertung möglich war. Eine Materialprüfung mit einer erfindungsgemäßen Defektgrößenbewertung liefert somit mehr Informationen über die Materialqualität und ermöglicht eine Prüfung bzw. Selektion von Bauteilen, die für besonders hohe Belastungen ausgelegt sein müssen, wie dies beispielsweise im Energiemaschinenbau, der Luftfahrt oder in der Eisenbahn der Fall ist.

Eine mögliche Ausführungsform des erfindungsgemäßen Verfahrens umfasst ferner einen Schritt zum Ermitteln einer Defektposition in dem Prüfobjekt aus der SAFT-Auswertung des ermittelten Messdatensatzes, wobei der Schritt zum Berechnen von Ultraschall-Echosignalen die Ultraschall-Echosignale für einen Defekt an der ermittelten Defektposition im Prüfobjekt berechnet.

Dies bietet den Vorteil, dass die Berechnung von simulierten Ultraschall-Echosignalen und die nachgeschaltete SAFT-Auswertung auf Positionen beschränkt werden, bei denen sich im Prüfobjekt tatsächlich ein Defekt befindet.

Bei einer alternativen Ausführungsform des erfindungsgemäßen Verfahrens berechnet der Schritt zum Berechnen von Ultraschall-Echosignalen die Ultraschall-Echosignale für Defekte an einer Mehrzahl von Positionen innerhalb des Prüfobjekts und führt für jede berechnete Defektposition eine SAFT-Auswertung der berechneten Ultraschall-Echosignale durch.

Werden diese Simulationen der Defekte im Prüfobjekt bereits vor der tatsächlichen Untersuchung des Prüfobjektes durchgeführt, kann der Rechenaufwand während der Objektprüfung minimiert werden.

Bei einer weiteren möglichen Ausführungsform des erfindungsgemäßen Verfahrens werden in dem Schritt zum Berechnen von Ultraschall-Echosignalen die Ultraschall-Echosignale für ein Prüfobjekt mit einer Mehrzahl von Defekten innerhalb des Prüfobjekts berechnet.

Die hat den Vorteil, dass die Durchführung der SAFT-Auswertung für die berechneten Ultraschallsignale innerhalb eines Schrittes erfolgt.

Bei einer weiteren Ausführungsform des erfindungsgemäßen Verfahrens werden in dem Schritt zum Berechnen von Ultraschall-Echosignalen die Ultraschall-Echosignale für eine Mehrzahl von Prüfobjekten mit jeweils mindestens einem Defekt berechnet.

Bei einer weiteren möglichen Ausführungsform des erfindungsgemäßen Verfahrens wird zur Bewertung der Defektgröße eine Ortsinterpolation und/oder eine Defektgrößeninterpolation der SAFT-Auswertungen der berechneten Ultraschall-Echosignale durchgeführt.

Dies bietet den Vorteil, dass auf Basis einer relativ geringen Anzahl von simulierten Defekten in dem Prüfobjekt eine sehr genaue Aussage über die Defektgröße und/oder Defektposition getroffen werden kann.

Eine mögliche weitere Ausführungsform des erfindungsgemäßen Verfahrens umfasst ferner einen Schritt zum Bereitstellen von Parametern eines Prüfszenarios, wobei der Schritt zum Berechnen von Ultraschall-Echosignalen für eine Mehrzahl von Defektgrößen in dem Prüfobjekt unter Verwendung der bereitgestellten Parameter des Prüfszenarios durchgeführt wird.

Solche Parameter für das Prüfszenario können beispielsweise das Material oder die Geometrie des Prüfobjekts, ein Prüfraster oder Prüfkopfparameter sein. Solche Parameter für das Prüfszenario können beispielsweise Prüfkopfparameter, Angaben über ein Prüfraster, das Material und/oder die Geometrie des Prüfobjekts sein.

Hierdurch wird vorteilhafterweise eine genaue Berechnung der Ultraschall-Echosignale für die jeweiligen Defekte ermöglicht.

Eine weitere mögliche Ausführungsform des erfindungsgemäßen Verfahrens umfasst ferner einen Schritt zum Bereitstellen von externen Zusatzinformationen über einen Defekt innerhalb des Prüfobjekts, wobei der Schritt zur Bewertung einer Defektgröße die Defektgröße unter Verwendung der bereitgestellten externen Zusatzinformationen bewertet.

Liegen beispielsweise weitere Daten über das Prüfobjekt und/oder den konkreten Messaufbau vor, so können diese vorteilhafterweise mit in den Prüfprozess, insbesondere in die Defektgrößenbewertung miteinfließen.

In einer speziellen Ausführungsform sind die Zusatzinformationen Informationen über die Orientierung des Defekts in dem Prüfobjekt.

In einer möglichen weiteren Ausführungsform des erfindungsgemäßen Verfahrens wird eine Mehrzahl von Messdatensätzen ermittelt, und die SAFT-Auswertung unter Verwendung der Mehrzahl von ermittelten Messdatensätzen durchgeführt.

Auf diese Weise kann durch diese Prüfung des Prüfobjekts mit mehreren einzelnen Messdatensätzen die Genauigkeit der Prüfung noch weiter verbessert werden. Beispielsweise können mehrere Messdatensätze mit unterschiedlichen Einschallwinkeln durchgeführt werden.

Bei einer möglichen weiteren Ausführungsform der erfindungsgemäßen Vorrichtung umfasst die Auswerteeinheit ferner eine Speichervorrichtung, die dazu ausgelegt ist, Amplitudensummen aus der SAFT-Auswertung für die berechneten Ultraschall-Echosignale zu speichern, wobei die Auswerteeinheit dazu ausgelegt ist, die gespeicherten Amplitudensummen für die berechneten Ultraschall-Echosignale aus der Speichereinheit auszulesen und die ausgelesenen Amplitudensummen für die Bewertung der Defektgröße in der SAFT-Auswertung des ermittelten Messdatensatzes anzupassen.

Dies hat den Vorteil, dass auch bereits die Simulationsergebnisse von Defekten aus vorherigen Simulationen weiter verwendet und gegebenenfalls angepasst werden können.

Im Folgenden werden mögliche Ausführungsformen der erfindungsgemäßen Vorrichtung und des erfindungsgemäßen Verfahrens zur Defektgrößenbewertung von einem Defekt innerhalb eines Prüfobjekts unter Bezugnahme auf die beigefügten Figuren näher erläutert.

Es zeigen:
- Fig. 1:: ein Diagramm zur Erläuterung der Funktionsweise des erfindungsgemäßen Verfahrens und der erfindungsgemäßen Vorrichtung zur Defektgrößenbewertung gemäß eines Ausführungsbeispiels der vorliegenden Erfindung;
- Fig. 2:: ein Blockschaltbild zur Darstellung eines Ausführungsbeispiels der erfindungsgemäßen Vorrichtung zur Defektgrößenbewertung; und
- Fig. 3:: ein Ablaufdiagramm zur Darstellung eines Ausführungsbeispiels des erfindungsgemäßen Verfahrens zur Defektgrößenbewertung.

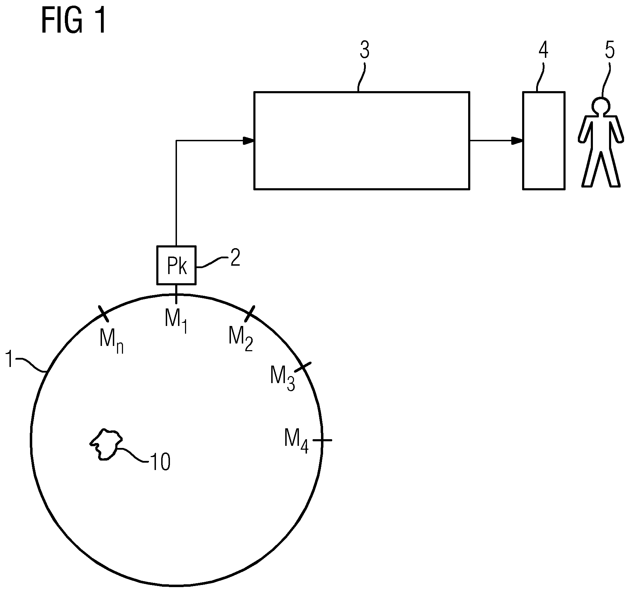

Figur 1 zeigt schematisch ein Ausführungsbeispiel der erfindungsgemäßen Vorrichtung zur Defektgrößenbewertung von einem Defekt 10 innerhalb eines Prüfobjekts 1. In dem dargestellten Beispiel ist das Prüfobjekt 1 zylinderförmig bzw. rotationssymmetrisch ausgebildet. Prüfobjekte 1 mit einer hiervon abweichenden Geometrie sind jedoch ebenso möglich. Der Prüfkopf 2 kann in seiner Lage relativ zu dem Prüfobjekt 1 verändert werden. Hierzu kann beispielsweise der Prüfkopf 2 an der Oberfläche des Prüfobjekts 1 entlang bewegt werden. Alternativ kann das Prüfobjekt 1 relativ zu dem Prüfkopf 2 bewegt werden. Auf diese Weise gelangt der Prüfkopf 2 zu verschiedenen Messpunkten Mi. Der Prüfkopf 2 dient dabei zum Einschallen eines Ultraschallsignals an den verschiedenen Messpunkten Mi des Prüfobjekts 1. Dabei wird zur Ermittlung eines Messdatensatzes jeweils das Ultraschallsignal mit einem bestimmten Einschallwinkel in das Prüfobjekt 1 eingeschallt. Der Einschallwinkel kann dabei zur Ermittlung verschiedener Messdatensätze für jeden Messdatensatz variiert werden. Der Einschallwinkel des Prüfkopfs 2 kann beispielsweise mittels Keilen, die zwischen dem Prüfkopf 2 und dem Prüfobjekt 1 angebracht werden, variiert werden. Ferner kann der Einschallwinkel auch durch zeitversetzte Ansteuerung des Prüfkopfs 2 verändert werden, wenn es sich bei dem Prüfkopf 2 um einen Gruppenstrahler oder ähnliches handelt. Grundsätzlich ist es dabei auch möglich, dass anstelle eines Prüfkopfes 2, der gleichzeitig als Sender und Empfänger der Ultraschallsignale dient, für das Aussenden der Ultraschallsignale und den Empfang der Echosignale separate Komponenten verwendet werden können. Die aufgenommenen Zeitsignale werden über eine Signalleitung zu einer Auswerteeinheit 3 übertragen. An diese Auswerteeinheit 3 ist beispielsweise eine Anzeigeeinheit 4 für einen Prüfer 5 angeschlossen.

Die Auswerteeinheit 3 führt für jeden ermittelten Messdatensatz eine SAFT (Synthetic Aperture Focussing Technique)-Auswertung durch. Die Ergebnisse dieser SAFT-Auswertung können daraufhin nach einer geeigneten Aufbereitung an der Anzeigevorrichtung 4 dargestellt werden. Diese Aufbereitung der SAFT-Auswertung umfasst dabei beispielsweise die Defektgrößenbewertung, wie sie nachfolgend näher erläutert wird. Dabei können auch mehrere Messdatensätze für ein Prüfobjekt 1 erfasst und ausgewertet werden. Vorzugsweise werden dabei alle SAFT-Auswerteergebnisse der einzelnen Messdatensätze basierend auf einem gemeinsamen Rekonstruktionsgitter aufbereitet.

Weist das Prüfobjekt 1 dabei einen im Vergleich zur verwendeten Wellenlänge relativ großen Defekt 10 auf, so kann die Größe dieses Defekts 10 direkt ausgemessen werden. Beispielsweise kann hierzu mittels Halbwertmethode eine Größenbewertung durchgeführt werden.

Bei relativ kleinen Defekten ist eine solche direkte Größenbestimmung nicht möglich. Der Übergang, bei dem eine direkte Defektgrößenbewertung nicht mehr möglich ist, ist dabei fließend. Insbesondere wird jedoch ist bei Defekten deren Größe kleiner oder gleich der Wellenlänge der verwendeten Ultraschallfrequenz ist als schwierig bis nicht mehr möglich. Eine Defektgrößenbewertung von solch kleinen Defekten erfolgt daher durch Gegenüberstellung von Simulationsergebnissen mit Messwerten. Hierzu führt die Auswerteeinheit 3 für verschiedene Defekte abgestufter Größe und für verschiedene Defektpositionen im Prüfobjekt 1 eine Simulation von Echosignalen für das auszuwertende Prüfszenario durch. Als Eingangsparameter erhält die Auswerteeinheit 3 hierzu eine möglichst detaillierte Beschreibung des Prüfszenarios. Diese Beschreibung des Prüfszenarios umfasst beispielsweise Parameter wie Material und/oder Geometrie des Prüfobjekts 1, das Prüfraster, das dieser Messung zugrunde liegt, sowie die bekannten Prüfkopfparameter des Prüfkopfs 2. Weitere verfügbare Informationen und auch gegebenenfalls weitere zusätzliche Informationen über das Prüfobjekt 1 sowie die Rahmenbedingungen der Prüfumgebung können ebenfalls in den Simulationsprozess mit einfließen.

Basierend auf den zur Verfügung gestellten Informationen über das Prüfszenario führt die Auswerteeinheit 3 eine Simulation der Echosignale aus. Dabei berechnet die Auswerteeinheit 3 die möglichen Ultraschall-Echosignale für verschiedene Größen und/oder verschiedene Positionen eines Defekts 10 innerhalb des Prüfobjekts 1. Die Simulationen der Ultraschall-Echosignale können dabei mittels bekannter konventioneller Simulationsverfahren berechnet werden, die dazu geeignet sind, die Schallausbreitung in dem Material des Prüfobjekts 1, die Eigenschaft des Prüfkopfs 2 sowie die Ultraschallreflektion in dem Material in geeigneter Weise zu simulieren. Solche Simulationsverfahren können beispielsweise strahlen- oder gitterbasierte Verfahren, wie zum Beispiel Punktquellensynthese, Elastodynamische Finite Integrationstechnik (EFIT) oder Finite Elemente (FE)-Methode sein. Andere Simulationsverfahren, die dazu geeignet sind, die Ultraschall-Echosignale für einen Defekt 10 innerhalb des Prüfobjekts 1 in geeigneter Weise zu berechnen, sind jedoch ebenso möglich.

Die Auswerteeinheit 3 berechnet dabei für mögliche Defekte innerhalb des Prüfobjekts 1 die Ultraschall-Echosignale für verschieden große Defekte 10. Die Defekte 10, wie sie dieser Berechnung zugrunde liegen, können dabei beispielsweise oberflächenparallel ausgerichtet sein. Alternative Orientierungen der Defekte 10 sind jedoch ebenso möglich. Weiterhin kann auch die Geometrie des für die Berechnung zugrunde liegenden Defekts 10 in geeigneter Weise gewählt werden. So ist es beispielsweise möglich, die angenommenen Defekte als Kreisscheiben oder sphärische Defekte anzunehmen. Solche kreis- oder kugelförmigen Defekte als Grundlage für die Simulation haben den Vorteil, dass bei der später folgenden Bewertung der Defektgrößen die jeweilige Defektgröße auf solche standardisierten Formen wie einen Kreis oder eine Kugel bezogen werden kann. Darüber hinaus ist jedoch ebenso auch eine beliebige andere Geometrie für die Defekte möglich, die der Simulation zugrunde gelegt werden kann.

Ist die Position eines Defekts 10 innerhalb des Prüfobjekts 1 bereits vorab bekannt, so kann die Berechnung der simulierten Ultraschall-Echosignale auch diese bereits bekannten Defektposition begrenzt werden. Somit kann der erforderliche Rechenaufwand minimiert werden. Die Bestimmung der Defektposition innerhalb des Prüfobjekts 1 kann bereits durch eine vorgelagerte Auswertung eines oder mehrerer Messdatensätze erfolgen.

Nach der Simulation der Ultraschall-Echosignale für verschiedene Defektgrößen erfolgt eine SAFT-Auswertung der berechneten Simulationsergebnisse in der Umgebung der Defektpositionen. Anschließend werden die Maxima der Amplitudensummen der SAFT-Auswertung in der Umgebung der Defektpositionen bestimmt. Diese Amplitudensummen der Simulationsergebnisse für unterschiedliche Defektgrößen und gegebenenfalls unterschiedliche Defektpositionen werden anschließend in einer Bewertungsmatrix zusammengestellt. Zur Verringerung des Rechenaufwands und des erforderlichen Speicherbedarfs, kann dabei die Abstufung der Defektgrößen und/oder der Defektpositionen während der Simulation in einem relativ groben Raster erfolgen. Das heißt, es ist während der Berechnung der Simulationsergebnisse nicht erforderlich, für jede mögliche Defektgröße und/oder jede mögliche Gitterposition innerhalb des Prüfobjekts 1 eine separate Simulation der Ultraschall-Echosignale und nachgeschalteten SAFT-Auswertung durchzuführen. Vielmehr ist es durch geeignete Interpolation möglich, nachträglich eine feinere Abstufung zu erreichen. Hierzu ist grundsätzlich jedes mögliche Interpolationverfahren möglich.

Insbesondere bietet es sich für die Ortsinterpolation von Defekten 10 innerhalb des Prüfobjekts 1 an, eine lineare Interpolation zwischen den einzelnen Defektpositionen anzuwenden. Für die Interpolation der Amplitudensummen in Bezug auf unterschiedliche Defektgrößen sind dabei besonders lineare Interpolationen im doppellogarithmischen Maßstab bzw. quadratische Interpolationen besonders vorteilhaft, da diese die typischen Abhängigkeiten zwischen Ersatzfehlergröße und Amplitudensummen im Falle flächiger Ersatzfehler besonders gut berücksichtigen. Aber auch hier sind grundsätzlich andere Interpolationsarten möglich. Die Amplitudensummen, die aus der SAFT-Auswertung des ermittelten Messdatensatzes hervorgehen, werden daraufhin unter Verwendung der SAFT-Auswertungen der berechneten Ultraschall-Echosignale, beispielsweise unter Verwendung der erstellten Bewertungsmatrix analysiert. Dabei kann für die SAFT-Auswertung eines ermittelten Messdatensatzes die Defektgröße und die Defektposition bestimmt werden, die den Werten der Bewertungsmatrix am Nächsten kommen. Zur weiteren Präzisierung kann dabei eine geeignete Interpolation erfolgen.

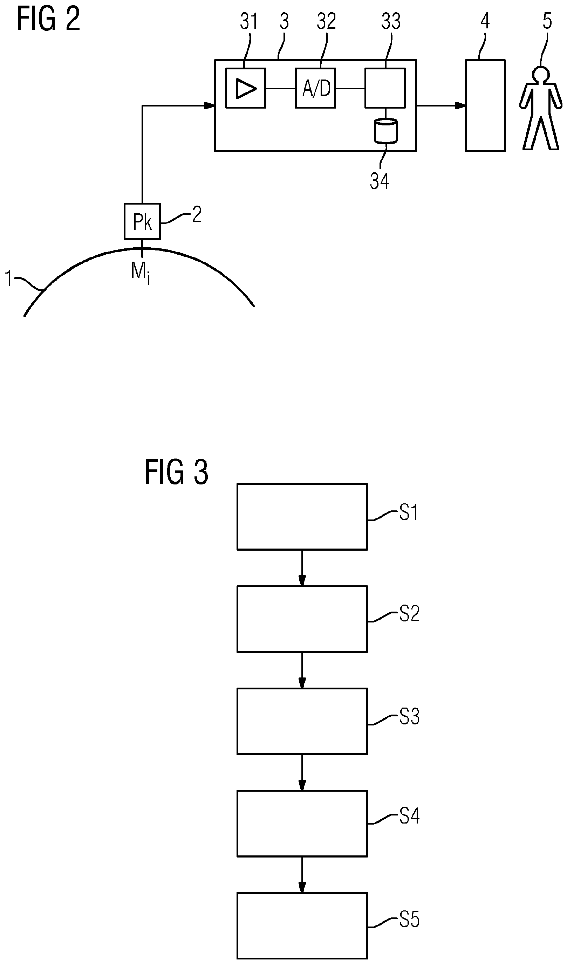

Figur 2 zeigt ein Ausführungsbeispiel der erfindungsgemäßen Vorrichtung zur Defektgrößenbewertung von einem Defekt 10 innerhalb eines Prüfobjekts 1. Zur Ermittlung eines Messdatensatzes des Prüfobjekts 1 mittels eines Prüfkopfs 2 wird ein Ultraschallsignal bei den Messpunkten Mi in das Prüfobjekt 1 eingeschallt. Die an den verschiedenen Messpunkten Mi von dem Prüfobjekt 1 zurückreflektierten Ultraschall-Echosignale werden durch den Prüfkopf 2 erfasst und als Zeitsignal für den jeweiligen Messpunkt Mi an die Auswerteeinheit 3 übertragen. Das empfangene Ultraschall-Echosignal für den jeweiligen Messpunkt Mi wird durch einen Signalverstärker 31 verstärkt und durch einen Analog-Digital-Wandler 32 der Auswerteeinheit 3 zu Messpunkt-Echodaten digitalisiert, die den Messdatensatz des Prüfobjekts 1 bilden. Der Messdatensatz kann anschließend in einer Datenverarbeitungseinheit 33, beispielsweise in einem Prozessor oder ähnlichem, ausgewertet und verarbeitet werden. Die Datenverarbeitungseinheit 33 führt für jeden Messdatensatz eine SAFT-Auswertung durch. Weiterhin erfolgt in der Datenverarbeitungseinheit 33 eine Berechnung der Ultraschall-Echosignale innerhalb des Prüfobjekts, wobei verschiedene Defektgrößen und gegebenenfalls auch verschiedene Defektpositionen simuliert werden. Basierend auf diesen simulierten Ultraschall-Echosignalen wird ebenfalls in der Datenverarbeitungseinheit 33 eine SAFT-Auswertung der berechneten Ultraschall-Echosignale durchgeführt. Die so gewonnenen Amplitudensummen der SAFT-Auswertung der berechneten Ultraschall-Echosignale werden in einer Bewertungsmatix zusammengefasst.

Anschließend werden detektierte kleinere Defekte 10 innerhalb des Prüfobjekts 1 beispielsweise basierend auf einer zuvor beschriebenen Bewertungsmatrix durch die Datenverarbeitungseinheit 33 bewertet. Die SAFT-Auswertung und insbesondere die Defektgrößenbewertung können anschließend auf einer Anzeigevorrichtung 4 für einen Benutzer 5 dargestellt werden.

Wie zuvor beschrieben, kann dabei die Berechnung des Simulationsergebnisses bereits eine Defektposition aus der SAFT-Auswertung der Messdaten mit einbeziehen. Um die Wartezeit aufgrund des hohen Simulationsaufwandes während der Auswertung zu reduzieren, können die Simulation und die Erstellung der Bewertungsmatrix auch bereits vorab erfolgen. Zu diesem Zeitpunkt ist jedoch noch keine konkrete Defektposition bekannt. Es muss in diesem Fall daher auch die Defektposition innerhalb des Prüfobjektes während der Simulation variiert werden und eine Simulation für die verschiedenen Defektpositionen durchgeführt werden, da die Vergleichsgröße zur der Bewertung der Defektgröße positionsabhängig ist.

Der Rechenaufwand kann dabei reduziert werden, indem eine bereits zuvor berechnete Bewertungsmatrix in einer Speichervorrichtung 34 abgespeichert wird, und diese zuvor abgespeicherte Bewertungsmatrix für nachfolgende Auswertungen und Bewertungen von Defektgrößen mehrfach verwendet werden.

Sollte sich bei einer nachfolgenden Prüfung das Prüfszenario leicht ändern, so kann dennoch ausgehend von einer zuvor erstellten Bewertungsmatrix durch geeignete Interpolation und/oder durch Rechenoperationen auf Basis der zuvor gespeicherten Bewertungsmatrix eine neue verfeinerte oder angepasste Bewertungsmatrix mit reduziertem Rechenaufwand erstellt werden. Insbesondere wenn ein Formelzusammenhang zwischen verschiedenen unterschiedlichen Prüfszenarien bekannt ist, so kann aus zuvor erstellten Bewertungsmatrizen mit reduziertem Rechenaufwand eine neue Bewertungsmatrix für ein angepasstes Prüfszenario abgeleitet werden. Beispielsweise bewirkt eine Verfeinerung des Prüfrasters eine entsprechende Vervielfachung der Amplitudensummen.

Weiterhin ist es auch möglich, bei der SAFT-Auswertung die Beiträge verschiedener Messpunkte unterschiedlich zu gewichten. Beispielsweise kann eine unterschiedliche Gewichtung in Abhängigkeit von der Richtung vom Messpunkt zum auszuwertenden Punkt erfolgen. In diesem Fall werden die Beiträge der SAFT-Auswertung im Rahmen der Simulation in gleicher Weise gewichtet, wie dies bei der Auswertung der Messdaten der Fall ist.

Es ist beispielsweise möglich, mehrere Simulationen Ultraschall-Echosignale für Prüfobjekte mit jeweils einem Defekt durchzuführen und diese Simulationen anschließend auszuwerten. Alternativ ist es jedoch ebenso möglich, ein Prüfobjekt mit mehreren Defekten 10 zu simulieren. In diesem Fall muss jedoch ein ausreichender Abstand zwischen den einzelnen Defekten 10 sichergestellt sein, um eine gegenseitige Beeinflussung dieser Defekte 10 zu vermeiden. Ferner ist es auch möglich, die zuvor genannten beiden Verfahren zu kombinieren. In diesem Fall können jeweils separat mehrere Prüfobjekte mit einer vorgegebenen Anzahl von Defekten simuliert werden und ausgewertet werden.

Figur 3 zeigt ein Ablaufdiagramm zur Darstellung eines Ausführungsbeispiels des erfindungsgemäßen Verfahrens zur Defektgrößenbewertung von einem Defekt 10 innerhalb eines Prüfobjekts 1.

In einem Schritt S1 wird zunächst mindestens ein Messdatensatz eines Prüfobjekts 10 ermittelt.

In einem weiteren Schritt S2 wird für jeden ermittelten Messdatensatz eine SAFT-Auswertung durchgeführt.

Weiterhin wird in Schritt S3 eine Berechnung von Ultraschall-Echosignalen für eine Mehrzahl von Defektgrößen in dem Prüfobjekt 1 durchgeführt. Die Defektgröße wird dabei innerhalb eines vorgegebenen Wertebereiches in Stufen variiert. Vorzugsweise handelt es sich dabei um Defektgrößen, die im Vergleich zu der verwendeten Wellenlänge der Ultraschallsignale klein oder zumindest nicht wesentlich größer sind und daher auf konventionelle Weise keine direkte Größenbestimmung möglich ist. Für die in Schritt S3 berechneten Ultraschall-Echosignale erfolgt daraufhin in Schritt S4 eine SAFT-Auswertung für alle berechneten Ultraschall-Echosignale der einzelnen Defektgrößen.

In Schritt S5 erfolgt eine Bewertung der Defektgröße in der SAFT-Auswertung des ermittelten Messdatensatzes unter Verwendung der SAFT-Auswertung der berechneten Ultraschall-Echosignale. Diese Bewertung der Defektgrößen kann zum Beispiel durch Vergleich der SAFT-Auswertung des ermittelten Messdatensatzes mit einer in einer Bewertungsmatrix tabellierten Amplitudensumme der einzelnen SAFT-Auswertungen der berechneten Ultraschall-Echosignale erfolgen. Basierend auf dieser Bewertung ist eine Bestimmung der Ersatzfehlergröße möglich. Bei dem erfindungsgemäßen Verfahren kommen die Vorteile der SAFT-Auswertung auch bei sehr kleinen Defektgrößen zum Tragen, da nun auch eine qualitative Bewertung kleinerer Defekte 10 möglich ist. Die erfindungsgemäße Defektgrößenbewertung von einem Defekt 10 innerhalb eines Prüfobjekts 1 ist gleichermaßen zur Bewertung von Defekten mit gerichteter oder mit ungerichteter Reflexion möglich. Weiterhin ist die erfindungsgemäße Defektgrößenbewertung in gleichem Maß für Prüfköpfe mit kleinem oder auch mit großem Öffnungswinkel des Schallfelds möglich.

Ein exemplarischer Ablaufs einer Ultraschallprüfung mit einer erfindungsgemäßen Defektgrößenbewertung kann dabei wie folgt ablaufen: Ein Prüfobjekt 1, beispielsweise ein sicherheitsrelevantes Bauteil des Energiemaschinenbaues, eines Flugzeugs oder einer Eisenbahn, wird mittels eines Prüfkopfs 2 einer Ultraschallprüfung unterzogen. Hierzu werden über den Prüfkopf 2 in das Prüfobjekt 1 an verschiedenen Messpunkten Mi Ultraschallwellen in das Prüfobjekt eingeschallt und die Ultraschall-Echosignale aus dem Prüfobjekt 1 von dem Prüfkopf 2 erfasst. Als Frequenzen für die Ultraschallprüfung sind beispielsweise 500 kHz bis 20 MHz, vorzugsweise 2MHz möglich. Dies entspricht in Stahl einer Wellenlänge von ca. 3 mm bzw. ca. 1,6 mm.

Die Ultraschall-Echosignale werden dabei von der Auswerteeinheit 3 mittels SAFT-Verfahren ausgewertet und auf der Anzeigevorrichtung 4 dargestellt. Befindet sich innerhalb des Prüfobjekts 1 ein Defekt 10, so kann dieser Defekt von der Auswerteeinheit 3 erkannt und auf der Anzeigevorrichtung 4 visualisiert werden.

Um auch für kleine Defekte 10, die aufgrund des begrenzten räumlichen Auflösungsvermögens nicht mehr direkt vermessen werden können, noch eine zuverlässige Abschätzung der Größe treffen zu können, erfolgt die Größenbewertung durch Vergleich mit Simulationswerten. Die Datenverarbeitungseinheit 33 der Auswerteeinheit 3 simuliert hierzu für das vorgegebene Prüfszenario (Prüfobjekt, Prüfkopf, Prüfraster, etc.) für mehrere Defektgrößen. Kann das System beispielsweise Defekte von weniger als 3mm nicht direkt auflösen, so werden für verschiedene Defektgrößen kleiner als 3mm Berechnungen durchgeführt, die die Ultraschall-Echosignale entsprechend kleiner Defekte simulieren. Dabei kann die Abstufung der angenommenen Defekte 10 in dem Prüfobjekt 1 beispielsweise linear in Schritten von 0,5 mm oder 0,2 mm erfolgen. Anschließend führt die Datenverarbeitungseinheit 33 eine SAFT-Auswertung der berechneten Simulationswerte durch. Ist zum Zeitpunkt der Berechnung des simulierten Defekts die Position des Defekts nicht bekannt, so muss während der Simulation der Defekte 10 auch die Position innerhalb des Prüfobjekts variiert werden und für verschiedene Defektpositionen jeweils die Defektgröße wie oben beschrieben variiert werden, da die Vergleichsgröße zur Defektgrößenbewertung positionsabhängig ist.

Eine schematische Darstellung einer beispielhaften Bewertungsmatrix für ein Prüfobjekt 1 mit einer zylinderförmigen Geometrie ist in der nachfolgenden Tabelle 1 dargestellt. Dabei entsprechen die Zeilen unterschiedlichen Defektpositionen und die Spalten unterschiedlichen Defektgrößen. In den Feldern der Bewertungsmatrix sind jeweils die Amplitudensummen aus der berechneten SAFT-Auswertung enthalten.

**Tabelle 1: Beispiel einer Bewertungsmatrix**

| **Abstand [mm]** | **Ersatzfehlergröße** | | |
|---|---|---|---|
| | **0,5 mm** | **1,0 mm** | **2,0 mm** |
| 250 | 57,0 | 255,3 | 1025.9 |
| 300 | 55,2 | 247,3 | 992,9 |
| 350 | 54,7 | 244,8 | 981,5 |
| 400 | 53,8 | 240,8 | 962,9 |
| 450 | 53,2 | 237,7 | 947,0 |
| 500 | 52,5 | 234,6 | 928,8 |
| 550 | 51,6 | 229,7 | 899,3 |

Die Defektpositionen können dabei für alle möglichen Gitterpunkte in der Bildebene der SAFT-Auswertung variiert werden. Zur Verringerung des Rechenaufwands können jedoch auch nur für bestimmte, ausgewählte Defektpositionen eine Simulation durchgeführt werden. Die genaue Defektposition kann in diesem Fall beispielsweise durch Interpolation später noch präzisiert werden.

Anschließend erstellt die Datenverarbeitungseinheit 33 eine Bewertungsmatrix, in der die Amplitudensummen der SAFT-Auswertungen mehrerer Defektgrößen und gegebenenfalls auch für verschieden Positionen zusammengefasst werden.

Die Simulation der Defektpositionen, also die Berechnung der Ultraschall-Echosignale, die SAFT-Auswertung der berechneten Ultraschall-Echosignale und die Erstellung der Bewertungsmatrix kann dabei bereits vor der eigentlichen Vermessung des Prüfobjekts 1 erfolgen. Somit ist während des Prüfvorgangs nur eine geringere Rechenleistung erforderlich. Da in diesem Fall während der Simulation die Defektposition noch nicht bekannt ist, müssen zwingend auch Simulationen für verschieden Defektpositionen durchgeführt werden.

Alternativ kann die Berechnung der Ultraschall-Echosignale, die SAFT-Auswertung der berechneten Ultraschall-Echosignale und die Erstellung der Bewertungsmatrix auch erst erfolgen, nachdem ein Defekt 10 in dem Prüfobjekt detektiert wurde. In diesem Fall kann die Simulation der Defekte auf die detektierte Defektposition begrenzt werden. Auch können in diesem Fall die bereits vorhandenen Messwerte als erste Abschätzung für eine Defektgröße herangezogen werden. Die Simulation der Defektgröße kann in diesem Fall auf Größen im Bereich des Schätzwerts begrenzt werden. Legt z.B. das Messergebnis nahe, dass der Defekt etwa eine Größe im Bereich von 1mm hat, so kann die Simulation auf Defektgrößen im Bereich von 0,5 mm bis 2mm eingeschränkt werden, wodurch sich eine weitere Reduktion der erforderlichen Rechenleistung ergibt.

Liegen SAFT-Auswertung der Messwerte und Bewertungsmatrix vor, erfolgt anschließend ein Vergleich. Dabei wird derjenige Wert der Bewertungsmatrix bestimmt, der den Messwerten an nächsten kommt. Hieraus kann dann auf die tatsächliche Defektgröße und ggf. Defektposition geschlossen werden.

Durch eine Interpolation benachbarter Werte der Bewertungsmatrix kann darüber hinaus die abgeschätzte Defektgröße und - position noch weiter angenähert werden.

Nachdem die Größe und ggf. die Position eines Defekts 10 auf die oben beschriebene Weise ermittelt wurde, werden die ermittelten Werte auf der Anzeigevorrichtung 4 dem Benutzer angezeigt.

Durch eine erfindungsgemäße Defektgrößenbewertung ist nun auch ein direkter Vergleich zwischen konventionellen Ultraschall-Analyseverfahren und SAFT-basierten Ultraschall-Verfahren möglich. Beliebige Fehler lassen sich mit dem Ersatzfehlertyp Kreisscheibe vergleichen. Auf diese Weise kann zum Beispiel ein differenzierter Vergleich mit den Belastungen bei der Konstruktion gezogen werden. Bei der Simulation der Ultraschall-Echosignale kann darüber hinaus berücksichtigt werden, dass bei sehr kleinen Kreisscheiben die Echohöhe nicht mehr proportional zu d² ist, wobei d der Durchmesser der Ersatzfehlergröße darstellt. Somit können auch diese Fälle richtig bewertet werden. Darüber hinaus lässt das erfindungsgemäße Verfahren auch die Einbeziehung weiterer Zusatzinformationen über einen Defekt 10 zu. So können beispielsweise Orientierungen von Defekten berücksichtigt werden, indem eine Serie von Defekten abgestufter Größe mit der bekannten Orientierung zur Bewertung herangezogen wird.

Zusammenfassend betrifft die vorliegende Erfindung eine Defektgrößenbewertung von Defekten 10 in einem Prüfobjekt 1 bei einer Ultraschallprüfung. Dabei ermöglicht die vorliegende Erfindung insbesondere auch eine gezielte Bestimmung von Defektgrößen basierend auf der SAFT-Methode. Hierzu werden basierend auf einem vorgegebenen Prüfszenario Defekte 10 in einem Prüfobjekt 1 simuliert und diese Simulationen mit real erfassten Messwerten verglichen.

## Patentansprüche

1. Verfahren zur Defektgrößenbewertung von einem Defekt (10) innerhalb eines Prüfobjektes (1), mit den Schritten:
- Ermitteln (S1) eines Messdatensatzes des Prüfobjekts (1);
- Durchführen (S2) einer Synthetic Aperture Focussing TechniqueAuswertung, SAFT-Auswertung, des ermittelten Messdatensatz;
- Berechnen (S3) von Ultraschall-Echosignalen für eine Mehrzahl von Defektgrößen in dem Prüfobjekt (1) durch Simulation von Echosignalen für ein Prüfszenario;
- Durchführen (S4) einer SAFT-Auswertung für die berechneten Ultraschall-Echosignale jeder der Mehrzahl von Defektgrößen;
- Bewertung (S5) einer Defektgröße in der SAFT-Auswertung des ermittelten Messdatensatzes durch Gegenüberstellung der SAFT-Auswertungen und der berechneten Ultraschall-Echosignale.

2. Verfahren nach Anspruch 1, ferner umfassend einen Schritt zum Ermitteln einer Defektposition in dem Prüfobjekt (1) aus der SAFT-Auswertung des ermittelten Messdatensatzes; wobei der Schritt (S3) zum Berechnen von Ultraschall-Echosignalen die Ultraschall-Echosignale für einen Defekt (10) an der ermittelten Defektposition im Prüfobjekt (1) berechnet.

3. Verfahren nach Anspruch 1, wobei der Schritt (S3) zum Berechnen von Ultraschall-Echosignalen die Ultraschall-Echosignale für Defekte (10) an einer Mehrzahl von Positionen innerhalb des Prüfobjekts (1) berechnet; und für jede berechnete Defektposition eine SAFT-Auswertung der berechneten Ultraschall-Echosignale durchgeführt wird.

4. Verfahren nach einem der vorherigen Ansprüche 1 bis 3, wobei der Schritt (S3) zum Berechnen von Ultraschall-Echosignalen die Ultraschall-Echosignale für ein Prüfobjekt (1) mit einer Mehrzahl von Defekten (10) innerhalb des Prüfobjekts (1) berechnet.

5. Verfahren nach einem der vorherigen Ansprüche 1 bis 3, wobei der Schritt (S3) zum Berechnen von Ultraschall-Echosignalen die Ultraschall-Echosignale für eine Mehrzahl von Prüfobjekten (1) mit jeweils mindestens einem Defekt (10) berechnet.

6. Verfahren nach einem der vorherigen Ansprüche 1 bis 5, wobei die SAFT-Auswertungen (S4) der berechneten Ultraschall-Echosignale für mehrere Prüfobjekte (1) mit jeweils mindestens einem Defekt (10) durchgeführt werden.

7. Verfahren nach einem der vorherigen Ansprüche 1 bis 6, wobei der Schritt zur Bewertung (S5) eine Ortsinterpolation und/oder eine Defektgrößeninterpolation der SAFT-Auswertungen der berechneten Ultraschall-Echosignale umfasst.

8. Verfahren nach einem der vorherigen Ansprüche 1 bis 7, ferner umfassend einen Schritt zum Bereitstellen von Parametern eines Prüfszenarios; wobei der Schritt zum Berechnen (S3) von Ultraschall-Echosignalen für eine Mehrzahl von Defektgrößen in dem Prüfobjekt (1) unter Verwendung der bereitgestellten Parameter des Prüfszenarios durchgeführt wird.

9. Verfahren nach Anspruch 8, wobei die bereitgestellten Parameter des Prüfszenarios mindestens Angaben über Prüfkopfparameter, ein Prüfraster, Material und/oder Geometrie des Prüfobjekts (1) umfassen.

10. Verfahren nach einem der vorherigen Ansprüche 1 bis 9, ferner umfassend einen Schritt zum Bereitstellen von externen Zusatzinformationen über einen Defekt (10) innerhalb des Prüfobjekts; wobei der Schritt (S5) zur Bewertung einer Defektgröße die Defektgröße unter Verwendung der bereitgestellten externen Zusatzinformationen bewertet.

11. Verfahren nach Anspruch 10, wobei die bereitgestellten externen Zusatzinformationen mindestens Angaben über eine Orientierung des Defekts (11) in dem Prüfobjekt (1) umfassen.

12. Verfahren nach einem der vorherigen Ansprüche 1 bis 11, wobei eine Mehrzahl von Messdatensätzen ermittelt werden; und die SAFT-Auswertung (S2) der unter Verwendung der Mehrzahl von ermittelten Messdatensätzen durchgeführt wird.

13. Verfahren nach einem der vorherigen Ansprüche 1 bis 12, wobei zur Ermittlung der Mehrzahl von Messdatensätzen jeweils ein Ultraschallsignal an verschiedenen Messpunkten in das Prüfobjekt (1) mit einem Einschallwinkel eingeschallt wird, welcher zur Ermittlung der Messdatensätze für jeden Messdatensatz verändert wird.

14. Vorrichtung zur Defektgrößenbewertung von einem Defekt (10) innerhalb eines Prüfobjektes (1), mit
- einem Prüfkopf (2) zum Einschallen eines Ultraschallsignals an verschiedenen Messpunkten (Mi) in das Prüfobjekt (1) zur Ermittlung mindestens eines Messdatensatzes, und
- einer Auswerteeinheit (3), die dazu ausgelegt ist, eine Synthetic Aperture Focussing Technique-Auswertung, SAFT-Auswertung, des ermittelten Messdatensatzes durchzuführen, Ultraschall-Echosignale für eine Mehrzahl von Defektgrößen in dem Prüfobjekt (1) durch Simulation von Echosignalen für ein Prüfszenario zu berechnen, eine SAFT-Auswertung für die berechneten Ultraschall-Echosignale jeder der Mehrzahl von Defektgrößen durchzuführen, und eine Defektgröße in der SAFT-Auswertung des ermittelten Messdatensatzes durch Gegenüberstellung der SAFT-Auswertungen und der berechneten Ultraschall-Echosignale zu bewerten.

15. Vorrichtung nach Anspruch 14, wobei die Auswerteeinheit (3) ferner eine Speichervorrichtung (34) umfasst, die dazu ausgelegt ist, Amplitudensummen aus der SAFT-Auswertung für die berechneten Ultraschall-Echosignale zu speichern, und wobei die Auswerteeinheit (3) dazu ausgelegt ist, eine gespeicherten Amplitudensummen für die berechneten Ultraschall-Echosignale aus der Speichereinheit auszulesen und die ausgelesenen Amplitudensummen für die Bewertung der Defektgröße in der SAFT-Auswertung des ermittelten Messdatensatzes anzupassen.

## Claims

1. Method for defect size rating for a defect (10) within a test object (1), having the steps of:
- ascertaining (S1) a measurement data record of the test object (1);
- performing (S2) a Synthetic Aperture Focussing Technique evaluation, SAFT evaluation, of the ascertained measurement data record;
- computing (S3) ultrasonic echo signals for a plurality of defect sizes in the test object (1) by means of simulation of echo signals for a test scenario;
- performing (S4) an SAFT evaluation for the computed ultrasonic echo signals of each of the plurality of defect sizes;
- rating (S5) a defect size in the SAFT evaluation of the ascertained measurement data record by means of comparison of the SAFT evaluations and the computed ultrasonic echo signals.

2. Method according to Claim 1, further comprising a step for ascertaining a defect position in the test object (1) from the SAFT evaluation of the ascertained measurement data record; wherein the step (S3) for computing ultrasonic echo signals computes the ultrasonic echo signals for a defect (10) at the ascertained defect position in the test object (1).

3. Method according to Claim 1, wherein the step (S3) for computing ultrasonic echo signals computes the ultrasonic echo signals for defects (10) at a plurality of positions within the test object (1); and an SAFT evaluation of the computed ultrasonic echo signals is performed for each computed defect position.

4. Method according to one of preceding Claims 1 to 3, wherein the step (S3) for computing ultrasonic echo signals computes the ultrasonic echo signals for a test object (1) having a plurality of defects (10) within the test object (1).

5. Method according to one of preceding Claims 1 to 3, wherein the step (S3) for computing ultrasonic echo signals computes the ultrasonic echo signals for a plurality of test objects (1) having at least one defect (10) in each case.

6. Method according to one of preceding Claims 1 to 5, wherein the SAFT evaluations (S4) of the computed ultrasonic echo signals are performed for multiple test objects (1) having at least one defect (10) in each case.

7. Method according to one of preceding Claims 1 to 6, wherein the rating step (S5) comprises a location interpolation and/or a defect size interpolation of the SAFT evaluations of the computed ultrasonic echo signals.

8. Method according to one of preceding Claims 1 to 7, further comprising a step for providing parameters of a test scenario; wherein the step for computing (S3) ultrasonic echo signals is performed for a plurality of defect sizes in the test object (1) by using the provided parameters of the test scenario.

9. Method according to Claim 8, wherein the provided parameters of the test scenario comprise at least indications of test head parameters, a test screen, material and/or geometry of the test object (1).

10. Method according to one of preceding Claims 1 to 9, further comprising a step for providing external supplementary information about a defect (10) within the test object; wherein the step (S5) for rating a defect size rates the defect size by using the provided external supplementary information.

11. Method according to Claim 10, wherein the provided external supplementary information comprises at least indications of an orientation of the defect (11) in the test object (1).

12. Method according to one of preceding Claims 1 to 11, wherein a plurality of measurement data records are ascertained; and the SAFT evaluation (S2) of the is performed by using the plurality of ascertained measurement data records.

13. Method according to one of preceding Claims 1 to 12, wherein ascertaining the plurality of measurement data records involves a respective ultrasonic signal being emitted into the test object (1) at different measurement points at a sound angle of incidence that is changed for each measurement data record in order to ascertain the measurement data records.

14. Apparatus for defect size rating for a defect (10) within a test object (1), having
- a test head (2) for emitting an ultrasonic signal into the test object (1) at different measurement points (Mi) in order to ascertain at least one measurement data record, and
- an evaluation unit (3) designed to perform a Synthetic Aperture Focussing Technique evaluation, SAFT evaluation, of the ascertained measurement data record, to compute ultrasonic echo signals for a plurality of defect sizes in the test object (1) by means of simulation of echo signals for a test scenario, to perform an SAFT evaluation for the computed ultrasonic echo signals of each of the plurality of defect sizes, and to rate a defect size in the SAFT evaluation of the ascertained measurement data record by means of comparison of the SAFT evaluations and the computed ultrasonic echo signals.

15. Apparatus according to Claim 14, wherein the evaluation unit (3) further comprises a memory apparatus (34) designed to store amplitude sums from the SAFT evaluation for the computed ultrasonic echo signals, and wherein the evaluation unit (3) is designed to read a stored amplitude sums for the computed ultrasonic echo signals from the memory unit and to adapt the read amplitude sums for the rating of the defect size in the SAFT evaluation of the ascertained measurement data record.

## Revendications

1. Procédé d'évaluation de la dimension d'un défaut (10) au sein d'un objet (1) à contrôler, comprenant les stades dans lesquels :
- on détermine (S1) un jeu de données de mesure de l'objet (1) à contrôler ;
- on effectue (S2) une évaluation par la technique Synthetic Aperture Focussing, évaluation SAFT, du jeu de données de mesure déterminé ;
- on calcule (S3) des signaux d'écho par ultrasons pour une multiplicité de grandeurs de défaut dans l'objet (1) à contrôler, par simulation de signaux d'écho pour un scénario de contrôle ;
- on effectue (S4) une évaluation SAFT pour les signaux d'écho par ultrasons calculés de chacune de la pluralité de grandeurs de défaut ;
- on évalue (S5) une grandeur de défaut dans l'évaluation SAFT du jeu de données de mesure déterminé par confrontation des évaluations SAFT et des signaux d'écho par ultrasons calculés.

2. Procédé suivant la revendication 1, comprenant, en outre, un stade de détermination d'une position de défaut dans l'objet (1) à contrôler, à partir de l'évaluation SAFT du jeu de données de mesure déterminé, le stade (S3) de calcul de signaux d'écho par ultrasons calculant les signaux d'écho par ultrasons pour un défaut (10) à la position de défaut déterminée dans l'objet à contrôler.

3. Procédé suivant la revendication 1, dans lequel le stade (S3) de calcul de signaux d'écho par ultrasons calcule les signaux d'écho par ultrasons pour des défauts (10) en une pluralité de positions au sein de l'objet (1) à contrôler et effectue, pour chaque position de défaut calculée, une évaluation SAFT des signaux d'écho par ultrasons calculés.

4. Procédé suivant l'une des revendications 1 à 3 précédentes, dans lequel le stade (S3) de calcul de signaux d'écho par ultrasons calcule les signaux d'écho par ultrasons pour un objet (1) à contrôler ayant une pluralité de défauts (10) au sein de l'objet (1) à contrôler.

5. Procédé suivant l'une des revendications 1 à 3 précédentes, dans lequel le stade (S3) de calcul de signaux d'écho par ultrasons calcule les signaux d'écho par ultrasons pour une multiplicité d'objets (1) à contrôler ayant chacun au moins un défaut (10).

6. Procédé suivant l'une des revendications 1 à 5 précédentes, dans lequel on effectue les évaluations (S4) SAFT des signaux d'écho par ultrasons calculés pour plusieurs objets à contrôler ayant chacun au moins un défaut (10).

7. Procédé suivant l'une des revendications 1 à 6 précédentes, dans lequel le stade d'évaluation (S5) comprend une interpolation spatiale et/ou une interpolation de grandeur de défaut des évaluations SAFT des signaux d'écho par ultrasons calculés.

8. Procédé suivant l'une des revendications 1 à 7 précédentes, comprenant, en outre, un stade de mise à disposition de paramètres d'un scénario de contrôle, le stade de calcul (S3) de signaux d'écho par ultrasons étant effectué pour une pluralité de grandeurs de défaut dans l'objet (1) à contrôler, en utilisant les paramètres mis à disposition du scénario de contrôle.

9. Procédé suivant la revendication 8, dans lequel les paramètres mis à disposition du scénario de contrôle comprennent au moins des indications sur des paramètres d'une tête de contrôle, une trame de contrôle, le matériau et/ou la géométrie de l'objet (1) à contrôler.

10. Procédé suivant l'une des revendications 1 à 9 précédentes, comprenant, en outre, un stade de mise à disposition d'informations extérieures supplémentaires sur un défaut (10) au sein de l'objet à contrôler, le stade (S5) d'évaluation d'une grandeur de défaut évaluant la grandeur du défaut, en utilisant les informations extérieures supplémentaires mises à disposition.

11. Procédé suivant la revendication 10, dans lequel les informations extérieures supplémentaires mises à disposition comprennent au moins des indications sur une orientation du défaut (11) dans l'objet (1) à contrôler.

12. Procédé suivant l'une des revendications 1 à 11 précédentes, dans lequel on détermine une pluralité de jeux de données de mesure ; et on effectue l'évaluation (S2) SAFT, en utilisant la pluralité de jeux de données de mesure déterminés.

13. Procédé suivant l'une des revendications 1 à 12 précédentes, dans lequel, pour déterminer la pluralité de jeux de données de mesure, on injecte, respectivement, un signal d'ultrasons en divers points de mesure de l'objet (1) à contrôler avec un angle d'injection que, pour déterminer les jeux de données de mesure, l'on modifie pour chaque jeu de données de mesure.

14. Dispositif d'évaluation de la grandeur d'un défaut (10) au sein d'un objet (1) à contrôler, comprenant
- une tête (2) de contrôle pour injecter un signal d'ultrasons en divers points (Mi) de mesure de l'objet (1) à contrôler, pour déterminer au moins un jeu de données de mesure, et
- une unité (3) d'évaluation conçue pour effectuer une évaluation par la technique Synthetic Aperture Focussing, évaluation SAFT, du jeu de données de mesure déterminé, calculer des signaux d'écho par ultrasons pour une pluralité de grandeurs de défaut dans l'objet (1) à contrôler, par simulation de signaux d'écho pour un scénario de contrôle, effectuer une évaluation SAFT pour les signaux d'écho par ultrasons calculés de chacune de la pluralité de grandeurs de défaut, et évaluer une grandeur de défaut dans l'évaluation SAFT du jeu de données de mesure déterminé par confrontation des évaluations SAFT et des signaux d'écho par ultrasons calculés.

15. Dispositif suivant la revendication 14, dans lequel l'unité (3) d'exploitation comprend, en outre, un dispositif (34) de mémoire, conçu pour mémoriser des sommes d'amplitude à partir de l'évaluation SAFT pour les signaux d'écho par ultrasons calculés, et dans lequel l'unité (3) d'évaluation est conçue pour lire une somme d'amplitude mémorisée pour les signaux d'écho par ultrasons calculés dans l'unité de mémoire et adapter les sommes d'amplitude lues pour l'évaluation de la grandeur de défaut dans l'évaluation SAFT du jeu de données de mesure déterminé.
